Europäisches Patentamt

European Patent Office

Office européen des brevets

(19)

(11) **EP 0 821 010 A1**

## (12) EUROPÄISCHE PATENTANMELDUNG

(43) Veröffentlichungstag:
28.01.1998 Patentblatt 1998/05

(51) Int. Cl.$^6$: **C08F 6/00**, B29C 47/76

(21) Anmeldenummer: 97112766.7

(22) Anmeldetag: 24.07.1997

(84) Benannte Vertragsstaaten:
AT BE CH DE DK ES FI FR GB GR IE IT LI LU MC NL PT SE

(30) Priorität: 26.07.1996 DE 19630389

(71) Anmelder:
BASF AKTIENGESELLSCHAFT
67056 Ludwigshafen (DE)

(72) Erfinder: Zettler, Hans Dieter
67269 Grünstadt (DE)

(74) Vertreter:
Isenbruck, Günter, Dr. et al
Patent- und Rechtsanwälte Bardehle-
Pagenberg-Dost-Altenburg-Frohwitter-Geissler
& Partner
Theodor-Heuss-Anlage 12
68165 Mannheim (DE)

(54) **Verfahren und Vorrichtung zum Entfernen von flüchtigen Bestandteilen aus hochviskosen Lösungen oder Suspensionen**

(57) Bei einem Verfahren zum Entfernen von flüchtigen Bestandteilen aus einem fließfähigen Ausgangsmaterial, das flüchtige und nichtflüchtige Bestandteile enthält, wird das Ausgangsmaterial auf den Zwischenbereich zwischen zwei rotierenden Walzen gebracht, die so ausgebildet und relativ zueinander angeordnet sind und betrieben werden, daß das Ausgangsmaterial bei der Drehung der Walzen in Richtung der Walzenachse gefördert wird, aber nicht von den Walzen herabfällt, und flüchtige Bestandteile werden dabei von dem Ausgangsmaterial in eine die Walzen offen umgebende Verdampfungskammer verdampft.

Figur 2

EP 0 821 010 A1

**Beschreibung**

Gegenstand der Erfindung sind ein Verfahren und eine Vorrichtung zum gleichmäßigen und schonenden Entfernen von flüchtigen Bestandteilen aus hochviskosen Lösungen, insbesondere Polymerlösungen, und oder/Suspensionen.

Zum Entgasen von flüchtige Bestandteile enthaltenden hochviskosen Lösungen oder Suspensionen, z.B. Polymerlösungen mit wesentlichen Anteilen von beispielsweise mehr als 10% an flüchtigen Bestandteilen, werden häufig insbesondere zum Konzentrieren von Lösungen Flashentgasungsprozesse herangezogen, bei denen die überhitzte Lösung in einen Behälter entspannt wird, die Lösungsmitteldämpfe aus einem Brüdenraum abgezogen werden und die Schmelze aus dem Sumpf des Behälters mittels einer Zahnradpumpe ausgetragen wird. Solche Verfahren sind in Schriften des VDI-Verlages, nämlich "Entgasen von Kunststoffen", 1980, S. 25 - 49, und "Entgasen beim Herstellen und Aufbereiten von Kunststoffen", 1992, S. 77 - 109, beschrieben. Die dort beschriebenen Verfahren weisen insbesondere den Nachteil auf, daß bei der Flashentgasung Schmelze an die Behälterwand spritzt und dort bei hohen Verweilzeiten und Temperaturen geschädigt werden kann. Anteile der Schmelze, die an der Wand haften, sind den hohen Temperaturen im Behälter bei langen Verweilzeiten ausgesetzt. Dadurch leidet die Produktqualität.

Um solche Mängel zu beseitigen, wurde in der oben erwähnten Schrift des VDI-Verlages "Entgasen beim Herstellen und Aufbereiten von Kunststoffen", S. 147 - 162, ein Verfahren beschrieben, bei dem die Flashentgasung in eine Schneckenmaschine hinein erfolgt und die Dämpfe entgegen der Transportrichtung der Schmelze über eine zurückliegende aufstromseitige Entgasungsöffnung abgezogen werden. Dieses Verfahren vermeidet zwar für größere Produktmengen lange Verweilzeiten, hat aber den Nachteil, daß dabei die Polymere starken Scherbeanspruchungen in den Schneckenspalten und Beanspruchungen aufgrund eines sich in dem Extruder ausbildenden Zweiphasengemisches (Gas/viskose Lösung) ergeben. Letzteres bewirkt geringe Füllgrade in der Abscheidezone mit Schmutzbelagbildung auf den Schnecken.

Aufgabe der Erfindung ist es, die Nachteile des Standes der Technik zu vermeiden. Insbesondere sollen ein Verfahren und eine Vorrichtung zum Entfernen von flüchtigen Bestandteilen aus hochviskosen Lösungen oder Suspensionen angegeben werden, bei denen die Entgasung relativ schonend, jedoch weitgehend vollständig und schnell durchgeführt werden kann. Außerdem sollen Vorrichtung und Verfahren so gestaltet sein, daß in einfacher Weise eine umweltverträgliche Entfernung und ggf. Verarbeitung des freigesetzten flüchtigen Materials ermöglicht wird. Schließlich soll eine Vorrichtung geschaffen werden, die mit preiswerten, teilweise standardisierten Elementen gebaut werden kann.

Diese Aufgabe wird erfindungsgemäß durch ein Verfahren und eine Vorrichtung gelöst, wie sie in den unabhängigen Patentansprüchen definiert sind. Bevorzugte Ausführungsformen ergeben sich aus den abhängigen Ansprüchen.

Erfindungsgemäß wird also ein Verfahren zum Entfernen von flüchtigen Bestandteilen aus einem fließfähigen Ausgangsmaterial, das flüchtige und nichtflüchtige Bestandteile enthält, zur Verfügung gestellt. Dieses erfindungsgemäße Verfahren ist dadurch gekennzeichnet, daß das Ausgangsmaterial auf den Zwischenbereich zwischen zwei rotierenden Walzen gebracht wird, die so ausgebildet und relativ zueinander angeordnet sind und betrieben werden, daß das Ausgangsmaterial bei der Drehung der Walzen in Richtung der Walzenachse gefördert wird, aber nicht von den Walzen herabfällt, und daß flüchtige Bestandteile dabei von dem Ausgangsmaterial in eine die Walzen offen umgebende Verdampfungskammer verdampft werden.

Bevorzugt sind erfindungsgemäß Verfahren, die eines oder mehrere der folgenden Merkmale aufweisen:

a) Ein unter Druck stehendes Ausgangsmaterial wird in den offenen, die Walzen umgebenden Bereich der Verdampfungskammer unter teilweiser Flash-Verdampfung von flüchtigen Bestandteilen entspannt und dann auf die Walzen gebracht;

b) Als Ausgangsmaterial wird eine flüchtige Bestandteile enthaltende Polymerlösung oder Polymersuspension verwendet, wobei bevorzugt ein Polymerlösungsmittel der flüchtige Bestandteil ist;

c) Es wird ein Ausgangsmaterial eingesetzt, das eine Viskosität beim Auftreffen auf die Walzen von mindestens etwa 10 Pas, vorzugsweise mindestens etwa 100 Pas hat.

d) Es wird ein Ausgangsmaterial eingesetzt, das beim Auftreffen auf die Walzen einen Gehalt an nichtflüchtigen Bestandteilen, insbesondere Feststoffen, speziell Kunststoffen, von etwa 50 bis 95 Gew.-%, vorzugsweise etwa 60 bis 90 Gew.-%, besonders bevorzugt etwa 65 bis 85 Gew.-%, aufweist;

e) Das aus dem Ausgangsmaterial verdampfte flüchtige Material wird aus der die Walzen offen umgebenden Verdampfungskammer abgezogen und verflüssigt und ggf. nach Reinigung zu der Herstellung des Ausgangsmaterials recycliert;

f) Das Ausgangsmaterial wird vor Aufbringen auf die Walzen auf eine Temperatur über dem Siedepunkt des flüchtigen Materials (beim Druck der die Walzen umgebenden Verdampfungskammer) erwärmt;

g) Das Ausgangsmaterial wird vor dem Aufbringen auf die Walzen auf eine Temperatur über dem Schmelzpunkt der nichtflüchtigen Bestandteile des Ausgangsmaterials erwärmt;

h) Das auf den Walzen entgaste Ausgangsmaterial wird unmittelbar einer Extrusionsstufe zugeführt, wobei vorzugsweise die Walzen in einen Zweischneckenzwangsförderer übergehen, der das entgaste Ausgangsmaterial zu einer Austrittsdüsenanordung fördert;

i) Das Entgasen erfolgt unter Unterdruck in der Verdampfungskammer;

j) Das Ausgangsmaterial wird auf gegensinnig drehende Walzen, die vorzugsweise mit den etwa auf gleicher Höhe horizontal verlaufenden Achsen angeordnet sind, zugeführt;

k) Das weitgehend entgaste Ausgangsmaterial wird von den Walzen direkt einem Extruder übergeben und von diesem direkt z.B. zu einem Granulierer gefördert.

Eine weitere Ausführungsform der Erfindung betrifft eine Vorrichtung zur Durchführung des erfindungsgemäßen Verfahrens. Diese Vorrichtung weist auf:

a) eine Drossel, die mit einer Quelle von unter Druck stehendem Ausgangsmaterial verbindbar ist und durch die das Ausgangsmaterial entspannt wird,

b) ein Paar von Walzen, die so ausgebildet und in der Vorrichtung angeordnet sind, daß das in der Drossel entspannte Ausgangsmaterial auf einen Bereich zwischen den Walzen gelangt, von wo aus das Ausgangsmaterial bei Drehung der Walzen in Richtung der Walzenachse gefördert wird,

c) eine Kammerwandanordnung, die die beiden Walzen über zumindest einen Teil ihrer Länge mit einem Abstand und unter Ausbildung einer die Walzen offen umgebenden Verdampfungskammer umgibt und die einen Abzug zum Entfernen der verdampften flüssigen Bestandteile aufweist,

d) einen Extruder, der so zu den Walzen angeordnet ist, daß das von den Walzen geförderte und in der Verdampfungskammer wenigstens teilweise und vorzugsweise weitgehend entgaste Ausgangsmaterial in den Extruder und zum Austrag von diesem gelangt.

Erfindungsgemäß ist es bevorzugt, daß die Vorrichtung eines oder mehrere der folgenden Merkmale aufweist:

a) Die Drossel ist als Flash-Verdampfungsdüse für Kunststofflösungen ausgebildet;

b) Stromaufwärts vor der Drossel ist ein Wärmetauscher zum Erwärmen des Ausgangsmaterials auf eine Temperatur über dem Siedepunkt des flüchtigen Bestandteils des Ausgangsmaterials bzw. über den Schmelzpunkt des festen Ausgangsmaterials (beim Druck der Verdampfungskammer) angeordnet;

c) Der Extruder ist als Zweischneckenextruder ausgebildet, wobei die beiden Schnecken koaxial zu und fest verbunden mit den Walzen angeordnet und ausgebildet sind, wobei vorzugsweise die Walzen und die Schnecken des Extruders einstückig miteinander ausgebildet sind;

d) Zumindest eine der Walzen ist mit Oberflächenstrukturen, insbesondere schraubenlinienförmigen Erhebungen oder Vertiefungen versehen, die das flüchtige Bestandteile abgebende Ausgangsmaterial in Richtung der Walzenachse fördern;

e) Die Walzen haben einen freien Abstand zwischen den Oberflächen aneinander von etwa 0,4 bis 10 mm, vorzugsweise etwa 0,5 bis 6 mm, besonders bevorzugt etwa 0,8 bis 5 mm;

f) Die Walzen haben einen Durchmesser von 50 bis 1000 mm, vorzugsweise von 100 bis 800 mm;

g) Die Schnecken des Zwangsförderers haben einen Außendurchmesser, der 2 bis 50 mm, vorzugsweise 5 bis 30 mm größer als der Durchmesser der Walzen ist;

h) Die Scherwalzen sind jeweils in 1 bis 2 Zonen temperierbar, wobei das Temperiermedium vorzugsweise über die Antriebseite zu- und abgeführt wird; vorzugsweise kann die Temperierung dabei so eingestellt werden, daß eine Walze frei von Produktbelegung bleibt und so ein gleichmäßig axialer Transport gewährleistet wird;

i) Durch Auswahl des Oberflächenmaterials und/oder der Oberflächenfeinstruktur einer Walze im Vergleich zu der Gegenwalze wird das entgasende Produkt am bzw. entlang nur einer der Walzen geleitet;

j) Die Verdampfungskammer ist mit einer Unterdruckquelle verbindbar;

k) Die Drossel führt direkt in ein Entspannungsrohr, das seinerseits in die Verdampfungskammer führt und vorzugsweise so dimensioniert ist, daß die Strömungsgeschwindigkeit der flash-verdampften gasförmigen Bestandteile des Ausgangsmaterials nicht mehr als etwa 3 m/s betragen;

l) Die Walzen sind für gegensinnige Rotation ausgebildet und in der Vorrichtung angeordnet;

m) Die Walzen haben im wesentlichen horizontal verlaufende und im wesentlichen in gleicher Höhe angeordnete Achsen, die vorzugsweise parallel zueinander sind;

n) Die Förderlänge der Walzen beträgt etwa 5 bis 7mal den Durchmesser der Walzen;

o) Der Zweischneckenextruder ist direkt mit einem Granulierer oder mit einer Schmelzenachbehandlungseinrichtung verbunden.

Überraschend war die Erkenntnis, daß sich Scherwalzenextruder als Abscheideorgane und Nachentgasungsorgane bei der Flashentgasung von Lösungen, insbesondere Polymerlösungen, und/oder -suspensionen mit Vorteil verwenden lassen, wobei der Scherwalzenextruder vorzugsweise durch ein kurzes Zweischneckenelement verlängert wird, das den axialen Austrag der konzentrierten Polymerlösung/-suspension oder der fertig entgasten Schmelze direkt zu einem Granuliersystem ermöglicht.

Insbesondere können erfindungsgemäß Polymerlösungen/-suspensionen durch Flashentgasung entgast werden. Erfindungsgemäß geht man dabei so vor, daß man die erhitzte Lösung oder Suspension in die Mine der beiden Walzen eines Scherwalzenextruders durch ein kurzes Entspannungsrohr entspannt, das so dimensioniert ist, daß eine Abtrennung der flüchtigen Bestandteile von dem Substrat weitgehend erfolgt und die Strömungsgeschwindigkeit der Dämpfe der flüchtigen Bestandteile am Austritt des Entspannungsrohres $\leq$ 3 m/s beträgt, daß man das Polymere, das durch die verdampfenden flüchtigen Bestandteile und die Schwerkraft angetrieben wird, auf die Walzen fließen läßt und die durch die Flashentgasung weitgehend entgaste Polymerschmelze mittels der Walzen austrägt.

Die Dimensionierung des Entspannungsrohrs zum Erreichen der gewünschten Gasaustrittsgeschwindigkeit kann dadurch geschehen, daß die Größenordnung des Durchmessers des Entspannungsrohrs bestimmt wird. Aus der pro Zeiteinheit zu verdampfenden und zu entfernenden Flüssigkeitsmenge wird das Dampfvolumen DV in m³/s ermittelt. Der Querschnitt Q in m² des Rohrs ergibt sich dann zu

$$Q \ (m^2) \geq \frac{DV \ (m^3/s)}{3 \ (m/s)}$$

Bei dem Transport des vorentgasten Polymeren, der beispielsweise über eine Länge von 5 - 7 x D (D = Walzendurchmesser) erfolgt, wird eine weitere Entgasung der polymeren Schmelze ermöglicht. Dabei sind die große Oberfläche und die Rotation des Knetgutes im Einzug der beiden Walzen der Entgasung dienlich.

Die mittels Gebläsen oder Vakuumpumpen abgezogenen flüchtigen Bestandteile, z.B. Lösungsmitteldämpfe, werden aus der Umgebung des Scherwalzenextruders entfernt und in der Regel kondensiert. Der Austrag der entgasten Schmelze aus dem Entgasungsraum bzw. aus dem Scherwalzenextruder erfolgt vorzugsweise über ein kurzes, dichtkämmendes, gegenläufiges Zweischneckenmaschinenteil, das sich direkt an den Scherwalzenteil anschließt und mit diesem formschlüssig verbunden ist. Die axiale Länge L des Zweischneckenmaschinenteils entspricht vorzugsweise dem Doppelten des Durchmessers D (Walzendurchmesser). Die beiden Schnecken sind von einem Gehäuse eingeschlossen, das ein kurzes, konisch erweitertes Übergangsstück besitzt, das einen einwandfreien Produkteinzug gewährleistet. Die Steigung der ein- oder mehrgängigen Schnecke beträgt vorzugsweise 0,2 - 0,5 x D.

Erfindungsgemäß bevorzugt wird das Verfahren für folgende Kunststoff/Lösungsmittel-Gemische eingesetzt:

| KUNSTSTOFF | LÖSUNGSMITTEL |
|---|---|
| Polyethylen | Ethylen |
| Polystyrol | Styrol oder Ethylbenzol |
| Polyamid 66 | Wasser |
| Polyamid 6 | Caprolactam |
| Polycarbonat | Methylenchlorid/Chlorbenzol |
| Polymethylmethacrylat | Methylmethacrylat |

Die erfindungsgemäße Vorrichtung soll nachfolgend anhand der Zeichnungen beispielsweise beschrieben werden, in der

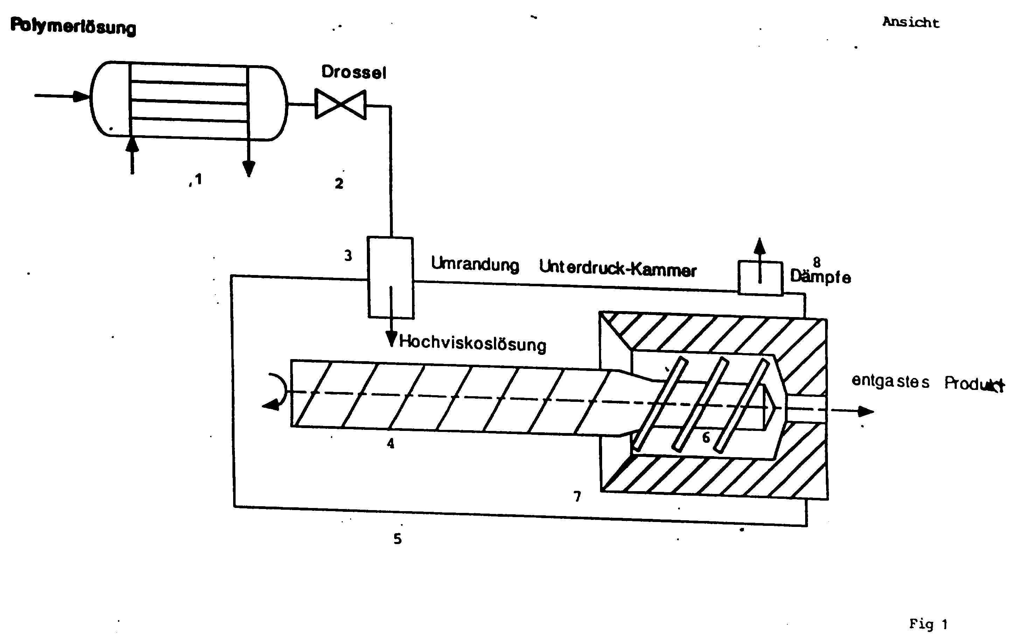

Fig. 1     eine schematische Darstellung einer erfindungsgemäßen Vorrichtung, und

Fig. 2     eine Seitenansicht und eine Draufsicht auf die erfindungsgemäße Knet-Verdampf- und Extrusionsvorrichtung

zeigen.

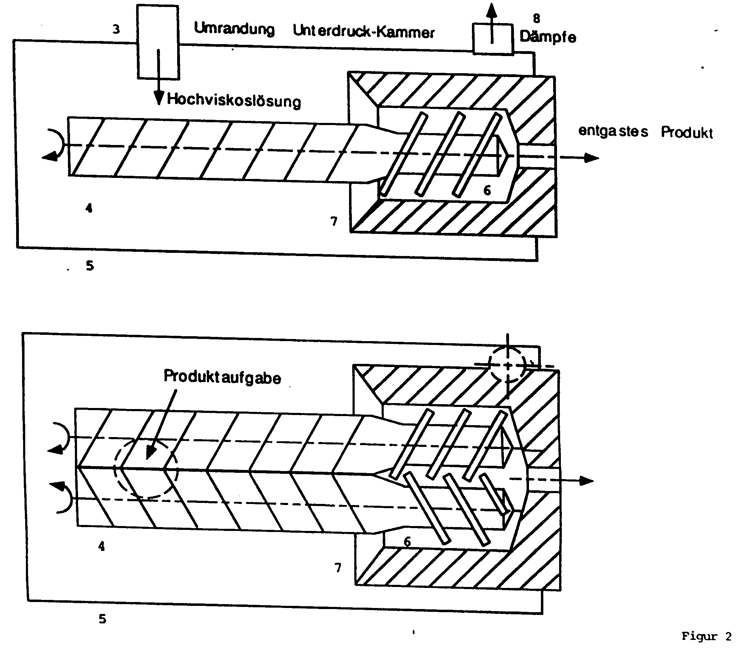

Nachdem die hochviskose Lösung oder Suspension, aus der die flüchtigen Bestandteile entfernt werden sollen, eine Heizvorrichtung, vorzugsweise einen Wärmetauscher 1, in welchem sie unter Druck auf eine Temperatur oberhalb des Siedepunktes des Lösungsmittels/der Flüssigkeit (beim Entspannungsdruck) erhitzt worden ist, verlassen hat, fließt sie durch die Drossel 2, die sowohl als Druckhalteorgan als auch als Entspannungsorgan dient, und expandiert in das Entspannungsrohr 3, über das die erste Abtrennung der Dampfphase von der Schmelze erfolgt. Die stark aufkonzentierte Lösung oder Suspension fällt von dort auf einen Scherwalzenextruder 4, der in einer vakuumdichten Kammer 5 untergebracht ist. In Figur 2 erkennt man die gegensinnige Drehungsrichtung der beiden Scherwalzen 4. Beide Walzen haben Rillen oder Erhebungen, z.B. in Helixform, wie in den Figuren angedeutet.

Mit den Scherwalzen 4 ist ein kurzes, dichtkämmendes, gegenläufiges Schneckenteil 6, das in einem geschlossenen Gehäuse 7 zum Zwangsfördern des entgasten Ausgangsmaterials rotiert und mit einer Düsenanordnung zum Austragen der Schmelze versehen ist, formschlüssig verbunden. Mit diesem Gehäuse 7 kann auch die Abdichtung der Kammer 5 bewirkt werden, wenn Anwendung von Unterdruck notwendig ist. Die Öffnung 8 in der Kammer 5 gestattet den Abzug der Dämpfe.

Die Walzen bzw. Schnecken sind an der Antriebsseite gelagert, zur Austragsseite hin frei fliegend. Zur Vermeidung von nicht zu akzeptierendem Anlaufen der Schnecken können die letzten 0,5 D der Schneckengänge stellitiert werden und besitzen zur Gehäusewand ein um 3/10 mm geringeres Spiel. Der Werkstoff des Gehäuses an dieser Stelle wird aus einem Werkstoff gefertigt, der mit der Schnecke zusammen gute Notlaufeigenschaften und im Schmelzebetrieb (Schmelze zentriert die Schnecke) geringen Abrieb aufweist. Vorzugsweise ist dieser Werkstoff ebenso wie der Werkstoff, aus dem die Walzen und Schnecken hergestellt sind, Nitrier- oder Chromstahl.

Die Scherwalzen sind jeweils in zwei Zonen temperierbar. Das Temperiermedium wird über die Antriebsseite zu- und abgeführt.

Die Drehzahl des Scherwalzenextruders ist zwischen 10 und 200 U/min einstellbar. Die Drehrichtung ist vorzugsweise so, daß die Walzen gegenläufig drehen und, von oben gesehen, zusammenlaufen.

Die zwangsfördernden Austragsschnecken transportieren die Schmelze über ein beheiztes Rohr einer nachfolgenden Behandlungszone oder über eine Lochdüse einem Kalt- oder Heißgranuliersystem, mit Hilfe dessen Granulate hergestellt werden, zu.

**Patentansprüche**

1. Verfahren zum Entfernen von flüchtigen Bestandteilen aus einem fließfähigen Ausgangsmaterial, das flüchtige und nichtflüchtige Bestandteile enthält, dadurch gekennzeichnet, daß das Ausgangsmaterial auf den Zwischenbereich zwischen zwei rotierenden Walzen gebracht wird, die so ausgebildet und relativ zueinander angeordnet sind und betrieben werden, daß das Ausgangsmaterial bei der Drehung der Walzen in Richtung der Walzenachse gefördert wird, aber nicht von den Walzen herabfällt, und daß flüchtige Bestandteile dabei von dem Ausgangsmaterial in eine die Walzen offen umgebende Verdampfungskammer verdampft werden.

2. Verfahren nach Anspruch 1, dadurch gekennzeichnet, daß ein unter Druck stehendes Ausgangsmaterial in den offenen, die Walzen umgebenden Bereich der Verdampfungskammer unter teilweiser Flash-Verdampfung von flüchtigen Bestandteilen entspannt und dann auf die Walzen gebracht wird.

3. Verfahren nach Anspruch 1, dadurch gekennzeichnet, daß ein Ausgangsmaterial eingesetzt wird, das eine Viskosität beim Auftreffen auf die Walzen von mindestens 10 Pas, vorzugsweise mindestens 100 Pas hat.

4. Verfahren nach Anspruch 1, dadurch gekennzeichnet, daß das Ausgangsmaterial vor Aufbringen auf die Walzen auf eine Temperatur über dem Siedepunkt des flüchtigen Materials (beim Druck der die Walzen umgebenden Verdampfungskammer) erwärmt wird.

5. Verfahren nach Anspruch 1 oder 4, dadurch gekennzeichnet, daß das Ausgangsmaterial vor dem Aufbringen auf die Walzen auf eine Temperatur über dem Schmelzpunkt der nichtflüchtigen Bestandteile des Ausgangsmaterials erwärmt wird.

6. Verfahren nach Anspruch 1, dadurch gekennzeichnet, daß das Ausgangsmaterial unter Unterdruck in der Verdampfungskammer entgast wird.

7. Vorrichtung zur Durchführung des Verfahrens nach einem der Ansprüche 1 bis 6, gekennzeichnet durch,

a) eine Drossel, die mit einer Quelle von unter Druck stehendem Ausgangsmaterial verbindbar ist und durch die das Ausgangsmaterial entspannt wird,
b) ein Paar Walzen, die so ausgebildet und in der Vorrichtung angeordnet sind, daß das in der Drossel entspannte Ausgangsmaterial auf einen Bereich zwischen den Walzen gelangt, von wo aus das Ausgangsmaterial bei Drehung der Walzen in Richtung der Walzenachse gefördert wird,
c) eine Kammerwandanordnung, die die beiden Walzen über zumindest einen Teil ihrer Länge mit einem Abstand und unter Ausbildung einer die Walzen offen umgebenden Verdampfungskammer umgibt und die einen Abzug zum Entfernen der verdampften flüssigen Bestandteile aufweist,

d) einen Extruder, der so zu den Walzen angeordnet ist, daß das von den Walzen geförderte und in der Verdampfungskammer wenigstens teilweise und vorzugsweise weitgehend entgaste Ausgangsmaterial in den Extruder und zum Austrag von diesem gelangt.

8. Vorrichtung nach Anspruch 7, dadurch gekennzeichnet, daß die Drossel als Flash-Verdampfungsdüse für Kunststofflösungen ausgebildet ist.

9. Vorrichtung nach Anspruch 7, dadurch gekennzeichnet, daß stromaufwärts vor der Drossel ein Wärmetauscher zum Erwärmen des Ausgangsmaterials auf eine Temperatur über dem Siedepunkt des flüchtigen Bestandteils des Ausgangsmaterials bzw. über dem Schmelzpunkt des festen Ausgangsmaterials (beim Druck der Verdampfungskammer) angeordnet ist.

10. Vorrichtung nach Anspruch 7, dadurch gekennzeichnet, daß der Extruder als Zweischneckenextruder ausgebildet ist, wobei die beiden Schnecken koaxial zu und fest verbunden mit den Walzen angeordnet und ausgebildet sind.

11. Vorrichtung nach Anspruch 7, dadurch gekennzeichnet, daß die Walzen einen freien Abstand zwischen den Oberflächen voneinander von etwa 0,4 bis 10 mm haben.

12. Vorrichtung nach Anspruch 7, dadurch gekennzeichnet, daß die Drossel direkt in ein Entspannungsrohr führt, das seinerseits in die Verdampfungskammer führt und so dimensioniert ist, daß die Strömungsgeschwindigkeit der flash-verdampften gasförmigen Bestandteile des Ausgangsmaterials nicht mehr als etwa 3 m/s beträgt.

**Polymerlösung**                                                                    Ansicht

**Drossel**

Umrandung   Unterdruck-Kammer   8 Dämpfe

Hochviskoslösung

entgastes Produkt

1   2   3   4   5   6   7

EP 0 821 010 A1

Fig 1

EP 0 821 010 A1

3    Umrandung    Unterdruck-Kammer        8
                                          Dämpfe

Hochviskoslösung

entgastes  Produkt

4

6

7

5

Produktaufgabe

4

6

7

5

Figur 2

**Europäisches Patentamt**

## EUROPÄISCHER RECHERCHENBERICHT

Nummer der Anmeldung

EP 97 11 2766

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 3 395 746 A (SZABO TED T ET AL)<br>* Spalte 1, Zeile 9 - Spalte 2, Zeile 66 *<br>* Spalte 3, Zeile 3 - Zeile 71 *<br>* Ansprüche; Abbildungen * | 1-12 | C08F6/00<br>B29C47/76 |
| X | US 3 809 140 A (ERDMENGER R ET AL)<br>* Zusammenfassung; Ansprüche; Abbildungen; Beispiele * | 1-12 | |
| X | DE 21 16 939 A (H.EGGERL ET AL.)<br>* Ansprüche; Abbildungen * | 1-6 | |
| A | US 3 799 235 A (MOOSAVIAN S ET AL)<br>* Zusammenfassung; Abbildungen; Beispiele * | 1-12 | |

RECHERCHIERTE SACHGEBIETE (Int.Cl.6)

C08F
B29C

Der vorliegende Recherchenbericht wurde für alle Patentansprüche erstellt

| Recherchenort | Abschlußdatum der Recherche | Prüfer |
|---|---|---|
| DEN HAAG | 4.November 1997 | Mettler, R-M |